# EUROPÄISCHE PATENTSCHRIFT

(11) **EP 2 577 174 B1**
(45) Veröffentlichungstag und Bekanntmachung des Hinweises auf die Patenterteilung: **04.01.2017**
(21) Anmeldenummer: 11721043.5
(22) Anmeldetag: 24.05.2011
(51) Int. Cl.: F24C 15/16

(54) **ANORDNUNG BESTEHEND AUS EINER AUSZUGSFÜHRUNG UND EINEM SEITENGITTER**
ASSEMBLY COMPRISING A PULL-OUT GUIDE AND A SIDE GRID
ASSEMBLAGE COMPRENANT UNE MONTURE DE GUIDAGE À COULISSE ET UNE GRILLE LATÉRALE

(30) Priorität: 27.05.2010 DE 102010017115
(43) Veröffentlichungstag der Anmeldung: 10.04.2013
(73) Patentinhaber: Paul Hettich GmbH & Co. KG, 32278 Kirchlengern (DE)
(72) Erfinder: JÄHRLING, Peter, 32257 Bünde (DE); REHAGE, Daniel, 09137 Chemnitz (DE); REIDT, Daniel, 32052 Herford (DE); KAPS, Timo, 33824 Werther (DE)
(74) Vertreter: Dantz, Jan Henning
(86) Internationale Anmeldenummer: PCT/EP2011/058416
(87) Internationale Veröffentlichungsnummer: WO 2011/147805

(56) Entgegenhaltungen:
- EP-A1- 0 626 143
- EP-A2- 1 014 004
- DE-A1- 3 924 101
- DE-A1-102007 015 247
- DE-A1-102009 009 124
- US-A1- 2007 261 694

## Beschreibung

Die vorliegende Erfindung betrifft eine Anordnung aus einer Auszugsführung und einem Seitengitter, insbesondere für einen Backofen, nach dem Oberbegriff des Anspruches 1.

Es sind Auszugsführungen für Backöfen bekannt, die über zusätzliche Befestigungselemente an einem Seitengitter montiert werden, wobei die Befestigungselemente an einer Führungsschiene festgelegt sind. Dadurch kann zwar eine stabile Befestigung der Auszugsführung an dem Seitengitter erhalten werden, allerdings müssen die Befestigungselemente und die Schienen der Auszugsführung vergleichsweise stabil und dickwandig ausgebildet sein. Zudem steigt der Energieverbrauch des Backofens durch das bei Benutzung des Backofens erhitzte Material.

Die DE 20 2008 010 188 offenbart ein Schnellbefestigungselement zur Montage einer Auszugsführung an einem Seitengitter eines Backofens. Hierfür sind zwei voneinander beabstandete Schnellbefestigungselemente an einer Schiene der Auszugsführung festgelegt, so dass die Schiene zwischen diesen Schnellbefestigungselement frei hängend angeordnet ist und sich durchbiegen kann. Die Schiene liegt nicht an der Stange des Seitengitters an. Ähnliche Schnellbefestigungselemente sind auch in der WO 2010/052165, DE 20 2005 020 458 und der DE 20 2004 005 475 gezeigt. Bei den Auszugsführungen der vorbekannten Systeme ist es daher erforderlich, die Schienen mit hoher Eigenstabilität auszubilden, damit die entsprechenden Belastungen im Gebrauch aufgenommen und auf die Schnellbefestigungselemente bzw. die Seitengitter übertragen werden können.

Die US 2007/0261694 A1 offenbart eine Auszugsführung, die über ein Befestigungselement an einer Außenseite einer stationären Führungsschiene festgelegt ist. An einer verfahrbaren Laufschiene ist ein Gargutträger abgestützt.

In der DE 39 24 101 A1 ist eine Vorrichtung zur Führung von Gargutträgern in einem Backofen gezeigt. Ein Traggerüst umfasst senkrechte Tragschienen, an denen ortsfeste Teleskopschienen an ihren Enden durch Schweißen befestigt sind, Auf den ortsfesten Teleskopschienen sind bewegliche Teleskopschienen geführt.

Es ist daher Aufgabe der vorliegenden Erfindung, eine Anordnung mit einer Auszugsführung und einem Seitengitter für einen Backofen zu schaffen, bei der die Auszugsführung eine hohe Stabilität auch bei geringer Materialstärke aufweist.

Diese Aufgabe wird mit einer Anordnung mit den Merkmalen des Anspruches 1 gelöst.

Erfindungsgemäß ist in der Führungsschiene der Auszugsführung zumindest abschnittsweise eine Stange durchgeführt, an der die Führungsschiene abgestützt ist. Dadurch kann die Führungsschiene besonders dünnwandig ausgebildet sein, da mechanische Lasten durch die Lagerung der Laufschiene auf die Stange übertragen werden können. Die Stange kann dabei linien-, streifen- oder leistenförmig oder flächig an der Führungsschiene anliegen, um diese abzustützen. Die Form der Stange kann dabei an die Geometrie der Führungsschiene angepasst sein.

Gemäß einer vorteilhaften Ausgestaltung ist die Führungsschiene klemmend oder rastend an der Stange festgelegt, so dass eine einfache Montage der Führungsschiene und der Auszugsführung erfolgen kann.

Die Stange ist Teil eines Seitengitters in einem Backofen. Ein solches Seitengitter ist in den meisten Backöfen ohnehin vorhanden, um Gargutträger verschiebbar in dem Innenraum des Backofens zu lagern. An dem Seitengitter können dann ein oder mehrere Auszugsführungen in unterschiedlichen Höhen des Seitengitters montiert werden. Die Stange kann dabei für eine stabile Abstützung der Gargutträger und der Auszugsführung als Vollprofil ausgebildet sein, aber auch eine Ausbildung als Hohlprofil oder anderes Profil ist möglich. Die Stange kann auch aus einem Rohr oder Verbundmaterial gebildet werden.

Die Führungsschiene ist vorzugsweise aus einem gebogenen Metallblech hergestellt. Dabei weist die Führungsschiene eine Dicke bzw. eine Wandstärke von weniger als 1 mm auf, insbesondere beträgt die Dicke zwischen 0,3 mm bis 0,8 mm.

Gemäß einer Ausgestaltung der Erfindung weist die Führungsschiene zwei voneinander beabstandete Stege auf, zwischen denen ein Schlitz ausgebildet ist, durch den ein Abschnitt der Stange durchführbar ist. Dadurch kann die Führungsschiene auf einfache Weise auf eine Stange aufgeschoben oder aufgeschwenkt werden, um dann in der gewünschten Position verrastet oder anderweitig festgelegt zu werden. Für eine stabile Abstützung sind dabei integral mit der Führungsschiene ein oder mehrere hervorstehende Stege ausgebildet, die die Stange teilweise umgreifen. Die Stege können dabei auch an einem abgebogenen Endabschnitt der Stange anliegen, um eine Belastung in unterschiedliche Richtungen an die Stange übertragen zu können. Hierfür kann die Stange an gegenüberliegenden Seiten einen abgebogenen Endabschnitt aufweisen, an denen dann Stege der Führungsschiene anliegen.

Die Stege können zur Erhöhung des Festsitzes aus Bimetall gefertigt sein, dass sich bei der bevorzugten Einsatztemperatur im Backofen zusammenzieht und die Stange somit fest von den Stegen umgriffen wird.

Gemäß einer alternativen Ausführungsform ist die Führungsschiene über ein zusätzliches Halteelement an der Stange festgelegt. Dadurch kann die Führungsschiene unverlierbar an der Stange fixiert werden.

Die Führungsschiene weist mindestens eine Laufbahn für Wälzkörper auf, wobei vorzugsweise im Bereich der Laufbahn die Führungsschiene an der Stange abgestützt ist. Dabei kann eine linienförmige Kontaktfläche auf der zur Lauffläche gegenüberliegenden Seite ausgebildet sein.

Vorzugsweise wird eine Anordnung aus einer Auszugsführung und einer Stange, insbesondere an einem Seitengitter für einen Backofen, bereitgestellt. Die Führungsschiene ist vorzugsweise zumindest in einem mittleren Bereich, also zwischen 30% und 70% der Länge der Führungsschiene an der Stange abgestützt, damit im Betrieb der Führungsschiene ein Biegen im mittleren Bereich vermieden werden kann.

Alternativ kann die erfindungsgemäße Auszugsführung auf Formkörper in Möbeln oder Haushaltsgeräten aufgeschoben werden. Beispielsweise können Holzleisten oder Kunststoffträger zur Aufnahme der Auszugsführung dienen, hierbei ragen diese in den Schlitz der Auszugsführung herein. Insbesondere bei Kühlgeräten können diese Trägerelemente integral mit der Wandung ausgebildet sein, es bilden sich somit keine Kältebrücken.

Die erfindungsgemäße Auszugsführung kann insbesondere in Möbeln oder Haushaltsgeräten eingesetzt werden.

Die Erfindung wird nachfolgend anhand mehrerer Ausführungsbeispiele mit Bezug auf die beigefügten Zeichnungen näher erläutert. Es zeigen:
- Figuren 1 bis 5: ein erstes Ausführungsbeispiel einer erfindungsgemäßen Auszugsführung;
- Figuren 6 bis 9: eine zweites Ausführungsbeispiel einer erfindungsgemäßen Auszugsführung;
- Figuren 10 bis 13: ein drittes Ausführungsbeispiel einer erfindungsgemäßen Auszugsführung;
- Figuren 14 bis 16: eine viertes Ausführungsbeispiel einer erfindurtgsgemäßen Auszugsführung;
- Figuren 17 und 18: ein fünftes Ausführungsbeispiel einer erfindungsgemäßen Auszugsführung, und
- Figuren 19 bis 22: ein sechstes Ausführungsbeispiel einer erfindungsgemäßen Auszugsführung;
- Figur 23: ein siebtes Ausführungsbeispiel einer erfindungsgemäßen Auszugsführung.

Eine Auszugsführung 1 umfasst eine stationär angeordnete Führungsschiene 2, an der eine Laufschiene 3 verfahrbar gelagert ist. Es ist auch möglich, zwischen Führungsschiene 2 und Laufschiene 3 noch eine Mittelschiene vorzusehen, damit die Auszugsführung 1 als Vollauszug ausgebildet ist.

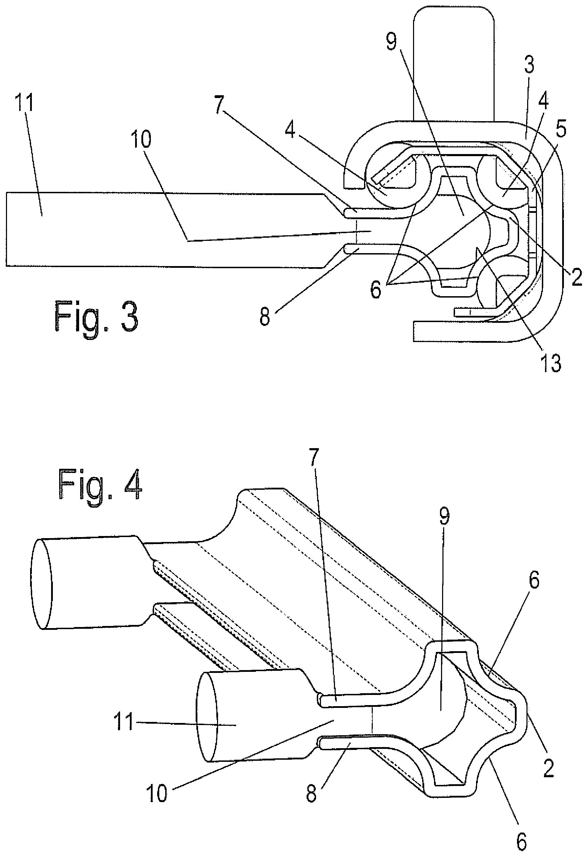

Wie in Figur 3 erkennbar ist, sind zwischen der Führungsschiene 2 und der Laufschiene 3 mehrere Wälzkörper 4 angeordnet, die auf Laufbahnen 6 an der Führungsschiene 2 abrollen. Dabei sind in eine Richtung senkrecht zur Längsrichtung der Führungsschiene 2 jeweils 3 Wälzkörper 4 in einer Ebene angeordnet, die in einem Laufkäfig 5 geführt sind. Die Anzahl der Wälzkörper 4 kann abhängig von den zu erwartenden Lasten gewählt werden.

Die Führungsschiene 2 ist aus einem gebogenen Metallblech hergestellt und besitzt einen Hohlraum, in den eine Stange 9 eingefügt ist. Die Führungsschiene 2 weist dabei zwei Stege 7 und 8 auf, zwischen denen ein Schlitz ausgebildet ist, durch den die Stange 9 durchführbar ist. Dabei ist die Stange 9 an einem abgewinkelten Endabschnitt 11 gehalten, der über eine Verjüngung, den Abschnitt 10 mit geringerer Dicke verfügt, an dem die Stege 7 und 8 der Führungsschiene 2 anliegen. Durch den verjüngten Abschnitt 10 kann die Führungsschiene 2 an der Stange 9 verrastet werden. Durch Kraft- und/oder Formschluss wird die Auszugsführung in Auszugsrichtung gesichert, um ein Lösen der Auszugsführung bei der Nutzung zu verhindern.

Die Führungsschiene 2 besteht aus einem dünnwandigen Metallblech, das vorzugsweise eine Dicke zwischen 0,3 mm und 0,8 mm aufweist. Um die Kräfte der Wälzkörper 4 direkt auf die Stange 9 übertragen zu können, liegt die Führungsschiene 2 auf der zu den Laufbahnen 6 abgewandten Seite an der Stange 9 an Kontaktflächen 13 an.

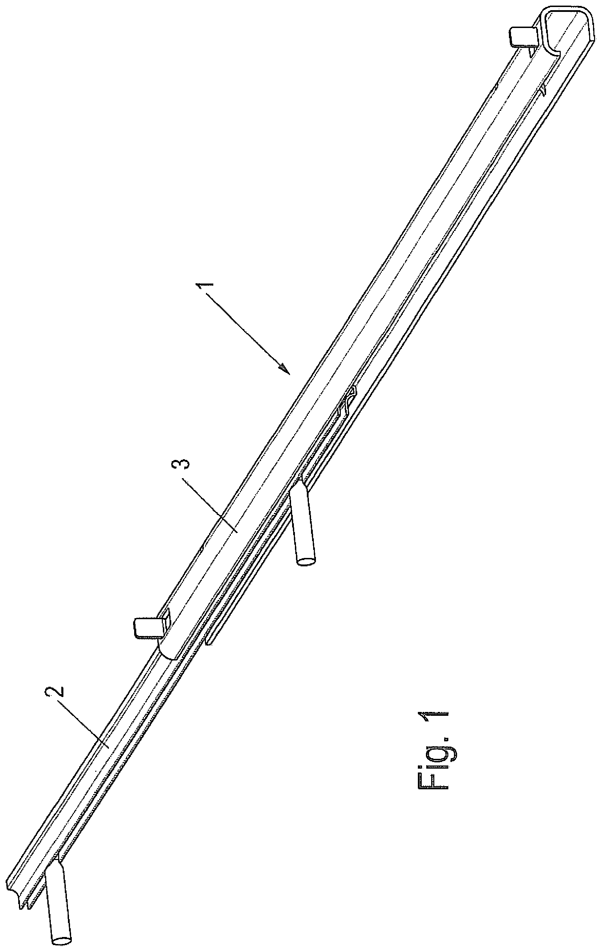

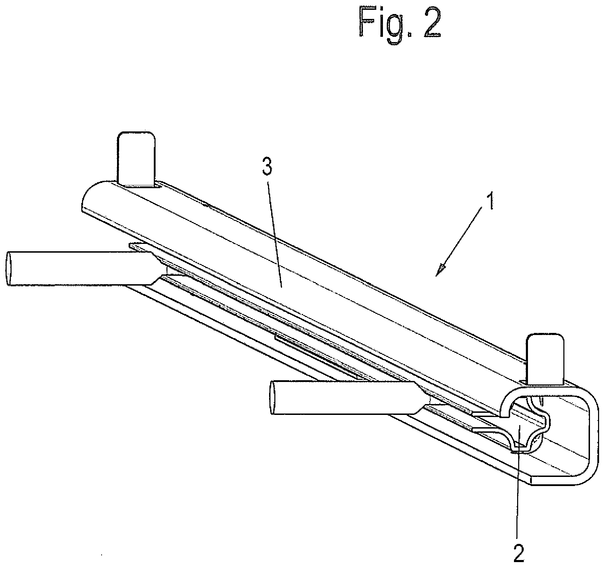

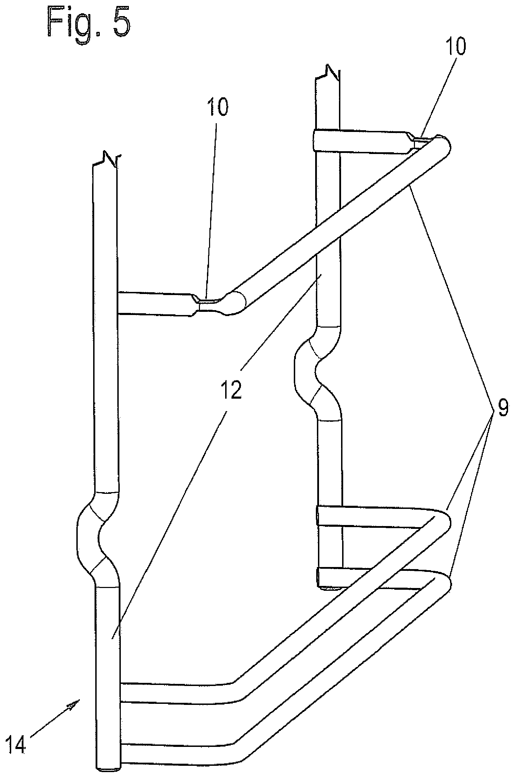

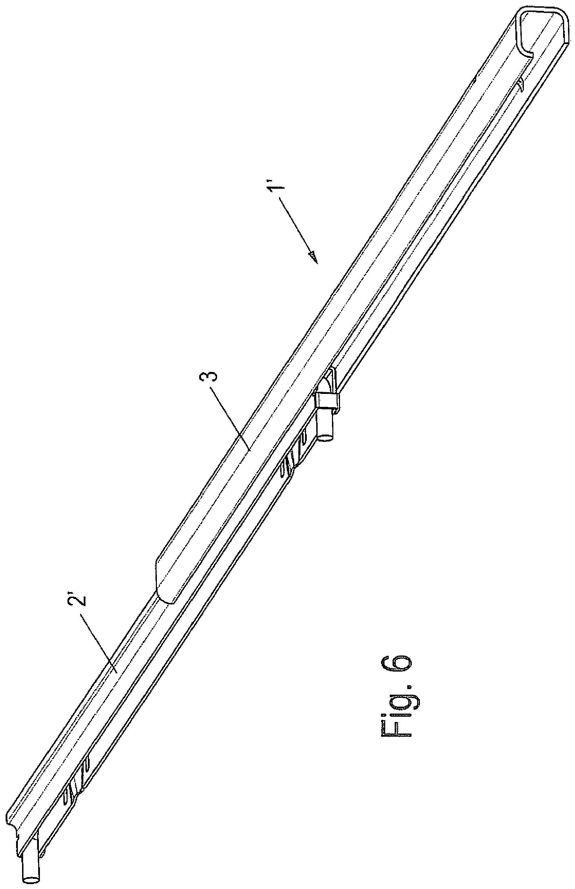

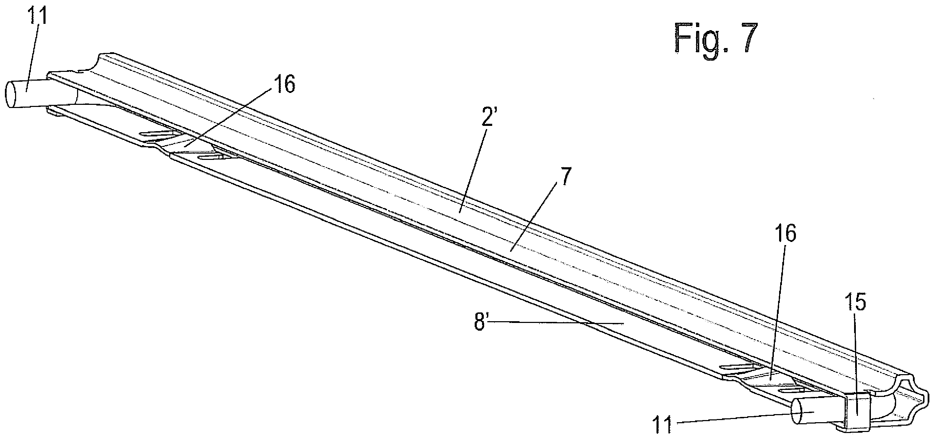

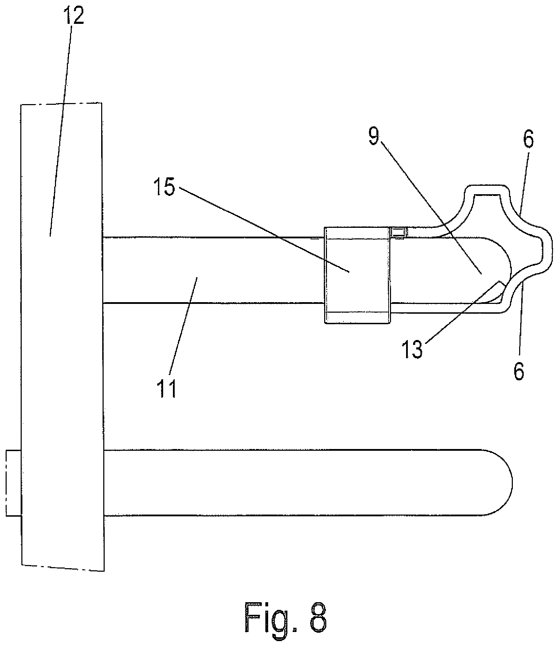

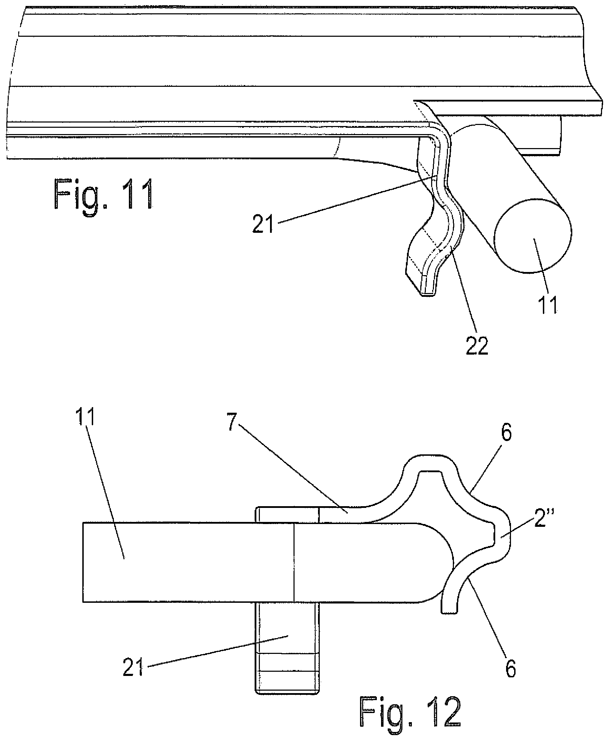

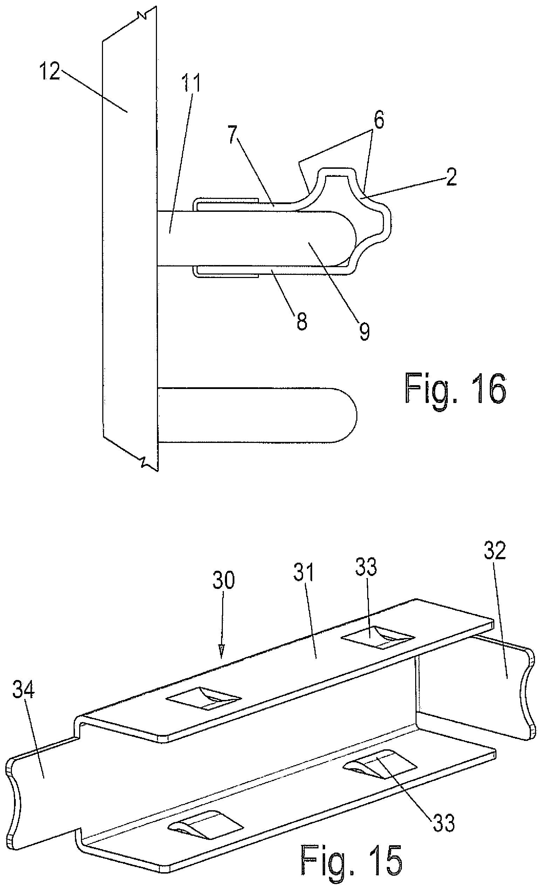

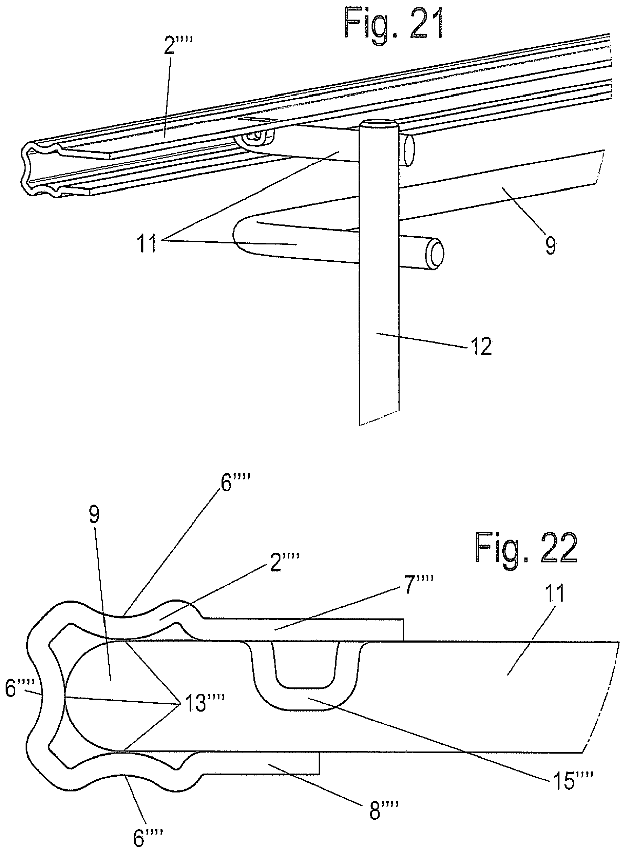

In Figur 5 ist ein Seitengitter 14 zur Festlegung der Auszugsführung 1 dargestellt. Das Seitengitter 14 umfasst mehrere Stangen 9, die über einen abgewinkelten Endabschnitt 11 mit vertikalen Pfosten 12 verbunden sind. Die Festlegung der Auszugsführung kann dabei an Stangen 9 mit einer Einschnürung 10 für das Ausführungsbeispiel gemäß den Figuren 1 bis 4 oder an Stangen 9 erfolgen, die einen konstanten Querschnitt besitzen, für die Ausführungsbeispiele gemäß den Figuren 6 bis 23.

Bei den nachfolgenden Ausführungsformen werden für gleiche Bauteile dieselben Bezugszeichen wie beim ersten Ausführungsbeispiel verwendet, um nur die Modifikationen zu erläutern.

In den Figuren 6 bis 9 ist ein zweites Ausführungsbeispiel einer erfindungsgemäßen Auszugsführung 1' gezeigt, die eine stationäre Führungsschiene 2' und eine verfahrbare Laufschiene 3 aufweist. Die Führungsschiene 2' umfasst einen oberen Steg 7 sowie einen unteren Steg 8', zwischen denen ein Schlitz zur Durchführung der Stange 9 ausgebildet ist. Integral an dem unteren Steg 8' sind zwei voneinander beabstandete Profilierungen 16 ausgebildet, die die Stange 9 hintergreifen. Die Profilierung 16 steht dabei von der Ebene des Steges 8' nach oben hervor und ist benachbart zu einer Aussparung 17 angeordnet. Eine Stirnkante der Profilierung 16 liegt dabei an der Rückseite der Stange 9 an, die an der gegenüberliegenden Seite an einer Kontaktfläche 13 rückseitig zu einer Laufbahn 6 anliegt. Dadurch ist die Führungsschiene 2' im Wesentlichen formschlüssig an der Stange 9 verrastet. Um eine Verschiebung in Längsrichtung der Führungsschiene 2' zu vermeiden, ist an dem oberen Steg 7 eine U-förmige Klammer 15 in Form eines Steges ausgebildet, der einen Schenkel 18 aufweist, der den Endabschnitt 11 der Stange 9 untergreift. Auf der gegenüberliegenden Seite ist ebenfalls eine Klammer 15 vorgesehen, so dass die Führungsschiene 2' in jede Richtung gesichert an der Stange 9 gehalten ist.

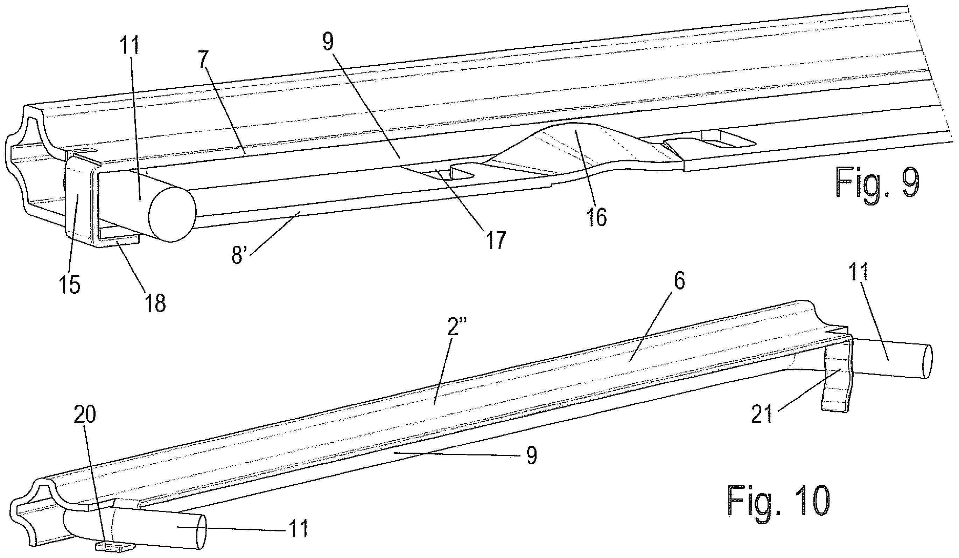

In den Figuren 10 bis 13 ist eine weitere Ausführungsform einer modifizierten Führungsschiene 2" gezeigt, die mit einer Laufschiene 3 gemäß den vorangegangenen Ausführungsbeispielen eine Auszugsführung bilden kann. Die Führungsschiene 2" ist aus einem gebogenen Metallblech gebildet, in dessen Hohlkammer eine Stange 9 eingefügt ist. Zur Festlegung der Führungsschiene 2" an der Stange 9 weist ein oberer Steg 7 endseitig einen L-förmigen Schenkel 20 auf, der einen Endabschnitt 11 der Stange 9 umgreift. Bei dieser Ausführungsform wurde auf den unteren Steg 8 verzichtet und somit eine besonders materialsparende Version einer Führungsschiene 2" erhalten. Die Führungsschiene 2" wird dabei über den L-förmigen Steg 20 und an der gegenüberliegenden Seite über einen Raststeg 21 festgelegt, der an der Innenseite eines abgebogenen Endabschnittes 11 der Stange 9 anliegt und über eine Rasterhebung 22 an diesem verrastet werden kann. Die Montage am Seitengitter 14 kann nach dem Unterschieben des Steges 20 unter den Endabschnitt 11 durch Einschwenken um die Mittelachse des Endabschnitts 11 erfolgen.

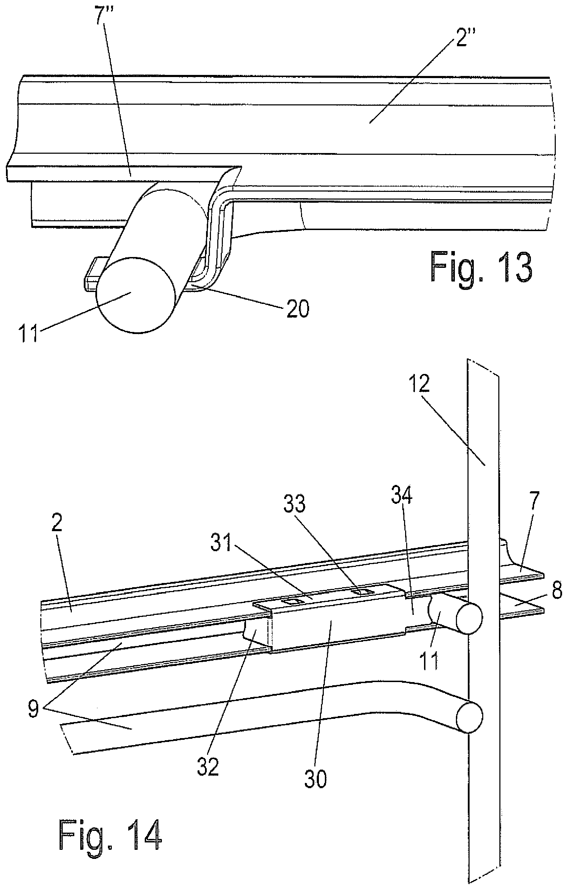

In den Figuren 14 bis 16 ist eine weitere Art der Befestigung für eine Führungsschiene 2 einer Auszugsführung dargestellt. Die Führungsschiene 2 ist wie bei dem in Figur 1 gezeigten Ausführungsbeispiel aus einem gebogenen Metallblech hergestellt, das zwei Stege 7 und 8 umfasst, zwischen denen die Stange 9 durchführbar ist. Um die Führungsschiene 2 an der Stange 9 festzulegen, ist ein zusätzliches Halteelement 30 vorgesehen, das einen U-förmigen Körper mit zwei Schenkeln 31 aufweist, die auf der Außenseite der Stege 7 und 8 anliegen. An jedem Schenkel 31 sind Profilierungen 33 ausgebildet, die an den Stegen 7 und 8 aufliegen oder mit diesen verprägt sein können. Um die Stege 7 und 8 beabstandet voneinander zu halten und die Führungsschiene 2 sicher an der Stange 9 des Seitengitters 14 festzulegen, ist ein Steg 32 an dem Halteelement 30 ausgebildet, der zwischen die Stege 7 und 8 eingreift. Ferner umfasst das Halteelement 30 einen Vorsprung 34, der an einem abgewinkelten Endabschnitt 11 der Stange 9 anliegt. Dadurch kann über das Halteelement 30 die Führungsschiene 2 sicher an der Stange 9 des Seitengitters festgelegt werden.

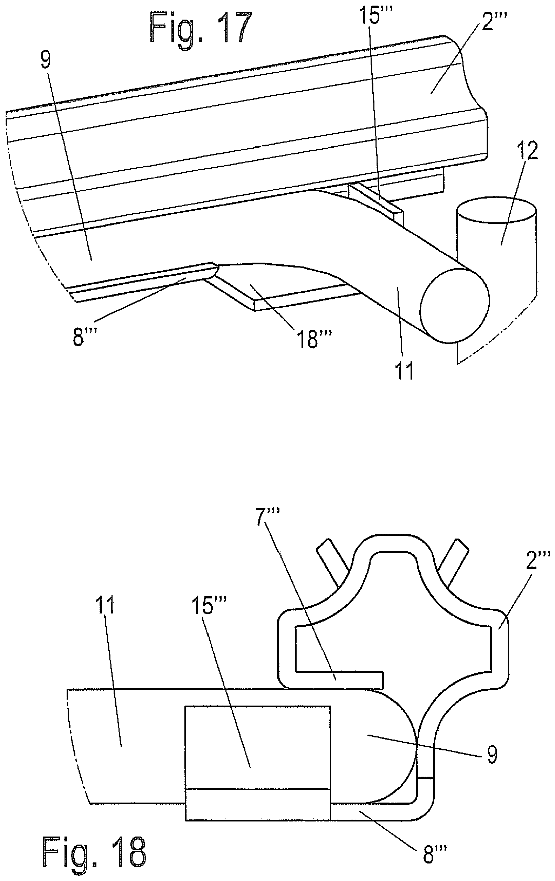

In den Figuren 17 und 18 ist eine weitere Ausführungsform einer Führungsschiene 2'" dargestellt, bei der ein oberer Steg 7'" nicht nach außen abgewinkelt ist, so dass das Ende von der Führungsschiene 2"' hervorsteht, sondern nach innen, so dass das Ende des Steges 7"' in die Hohlkammer der Führungsschiene 2'" ragt. Der Steg 7"' liegt dabei auf einer Oberseite der Stange 9 auf. Ein unterer Steg 8"' der Führungsschiene 2'" untergreift die Stange 9. Ferner sind an dem Steg 8'" an gegenüberliegenden Seiten integral ausgebildete Klammern 15"' ausgebildet, die eine untere Abstützfläche 18"' umfassen, die sowohl an der Unterseite der Stange 9 als auch an dem abgewinkelten Endabschnitt 11 anliegen. Benachbart zu der Klammer 15'" ist in dem Bereich der Stange 9 der Steg 8'" mehrfach abschnittsweise leicht nach oben gebogen, so dass die Stange 9 hintergriffen ist und die Führungsschiene 2"' an der Stange 9 verrastet werden kann.

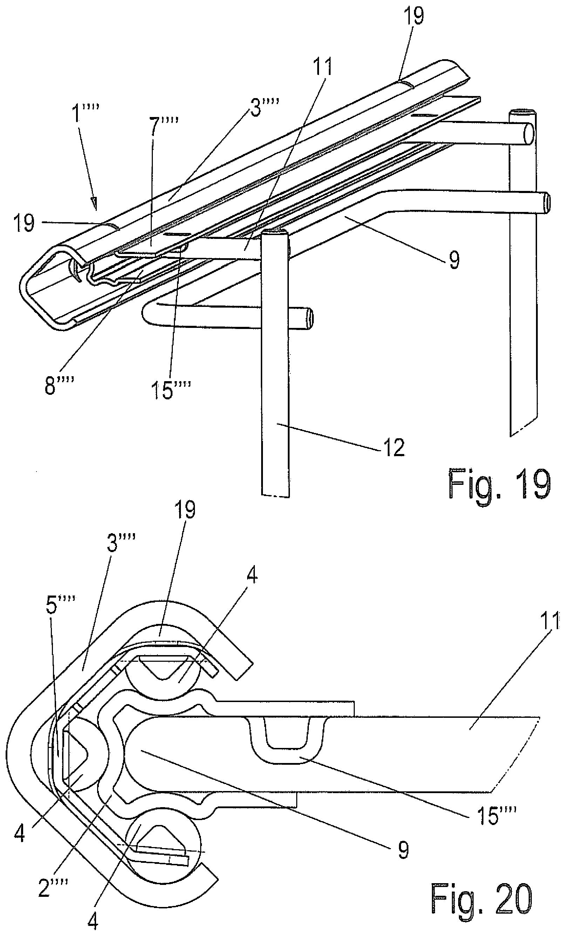

In den Figuren 19 bis 22 ist ein weiteres Ausführungsbeispiel einer Auszugsführung 1"" gezeigt, die eine verfahrbar gelagerte Laufschiene 3"" aufweist, die an einer Führungsschiene 2"" über Wälzkörper 4 verfahrbar gelagert ist. Die Laufschiene 3"" besitzt eine im Querschnitt im Wesentlichen C-förmige Kontur, wobei die Wälzkörper 4 so angeordnet sind, dass eine Reihe von Wälzkörpern 4 oberhalb der Stange 9, eine Reihe von Wälzkörpern 4 unterhalb der Stange 9 sowie eine Reihe von Wälzkörpern 4 horizontal seitlich an der Stange 9 angeordnet sind. Die Führungsschiene 2"" ist dabei so angeordnet, dass die Laufbahnen 6 für die Wälzkörper 4 gebogen ausgebildet sind und mit einer linienförmigen Kontaktfläche 13 jeweils an der Stange 9 abgestützt sind, wobei die Kontaktflächen 13"" an der Oberseite, der Unterseite und einer horizontalen Seitenfläche der Stange 9 angeordnet sind. Die Wälzkörper 4 werden in einem Laufkäfig 5"" geführt. Zur Begrenzung des Verfahrweges weist die Auszugsführung einen Anschlag 19 für den Laufkäfig 5"" bzw. die Wälzkörper 4 auf.

Um die Führungsschiene 2"" an der Stange 9 festzulegen, sind an der Führungsschiene 2"" integral ausgebildete Laschen 15"" ausgebildet, die an einem abgewinkelten Endabschnitt 11 der Stange anliegen. Dadurch wird verhindert, dass die Führungsschiene 2"" in Längsrichtung relativ zu der Stange 9 verschoben werden kann. Ferner können die Stege 7"" und 8"" der Führungsschiene 2'" klemmend an der Stange 9 bzw. dem abgewinkelten Endabschnitt 11 festgelegt sein.

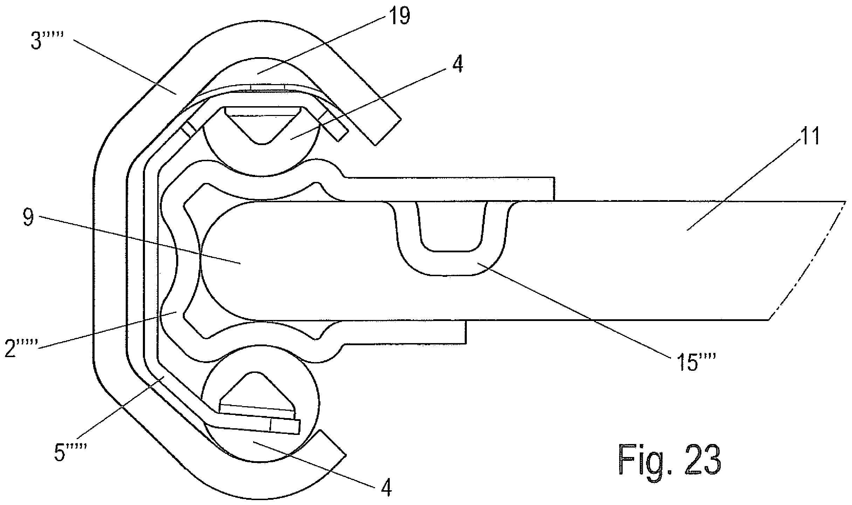

In der Figur 23 ist ein weiteres Ausführungsbeispiel einer Auszugsführung 1""' gezeigt, die eine verfahrbar gelagerte Laufschiene 3""' aufweist, die an einer Führungsschiene 2""' über Wälzkörper 4 verfahrbar gelagert ist. Die Laufschiene 3""' besitzt eine im Querschnitt im Wesentlichen C-förmige Kontur, wobei die Wälzkörper 4 so angeordnet sind, dass eine Reihe von Wälzkörpern 4 oberhalb der Stange 9 und eine Reihe von Wälzkörpern 4 unterhalb der Stange 9 angeordnet sind und nur zwei Reihen von Wälzkörpern 4 vorgesehen sind. Die Führungsschiene 2""' ist dabei so angeordnet, dass die Laufbahnen 6 für die Wälzkörper 4 gebogen ausgebildet sind und mit einer linienförmigen Kontaktfläche 13 jeweils an der Stange 9 abgestützt sind, wobei die Kontaktflächen 13""' an der Oberseite, der Unterseite und einer horizontalen Seitenfläche der Stange 9 angeordnet sind.

Die Wälzkörper 4 werden in einem Laufkäfig 5""' geführt. Zur Begrenzung des Verfahrweges weist die Auszugsführung einen Anschlag 19 für den Laufkäfig 5""" bzw. die Wälzkörper 4 auf. Die Festlegung der Auszugsführung 1'"" erfolgt wie in Figur 19 dargestellt.

### Bezugszeichenliste

- 1: Auszugsführung
- 1': Auszugsführung
- 1"": Auszugsführung
- 1""': Auszugsführung
- 2: Führungsschiene
- 2': Führungsschiene
- 2": Führungsschiene
- 2"': Führungsschiene
- 2"": Führungsschiene
- 2"'": Führungsschiene
- 3: Laufschiene
- 3"": Laufschiene
- 3""': Laufschiene
- 4: Wälzkörper
- 5: Laufkäfig
- 5"": Laufkäfig
- 5""': Laufkäfig
- 6: Laufbahnen
- 7: Steg
- 7"': Steg
- 8: Steg
- 8': Steg
- 8'": Steg
- 8"": Steg
- 9: Stange
- 10: Abschnitt
- 11: Endabschnitt
- 12: Pfosten
- 13: Kontaktfläche
- 13"": Kontaktfläche
- 14: Seitengitter
- 15: Klammer
- 15"': Klammer
- 15"": Lasche
- 16: Profilierung
- 17: Aussparung
- 18: Schenkel
- 18'": Abstützfläche
- 19: Anschlag
- 20: Steg
- 21: Raststeg
- 22: Rasterhebung
- 30: Halteelement
- 31: Schenkel
- 32: Steg
- 33: Profilierung
- 34: Vorsprung

## Patentansprüche

1. Anordnung aus einer Auszugsführung und einem Seitengitter (14), insbesondere für einen Backofen, wobei das Seitengitter (14) eine Stange (9) umfasst und die Auszugsführung (1, 1', 1"", 1""') eine ortsfeste Führungsschiene (2, 2', 2", 2'", 2"", 2""') und mindestens eine an der Führungsschiene (2, 2', 2", 2"', 2"", 2""') bewegbar gelagerte Laufschiene (3, 3"", 3""') aufweist und die Führungsschiene (2, 2', 2", 2"', 2"", 2""') als Hohlprofil ausgebildet ist, **dadurch gekennzeichnet, dass** an der Führungsschiene (2, 2', 2", 2"', 2"", 2""') zumindest abschnittsweise eine Stange (9) eingefügt ist, an der die Führungsschiene (2, 2', 2", 2"', 2"", 2""') abgestützt ist und integral mit der Führungsschiene (2, 2', 2", 2"', 2"") mindestens ein hervorstehender Steg (15, 20, 21, 15"', 15"") ausgebildet ist, der die Stange (9) teilweise umgreift.

2. Anordnung nach Anspruch 1, **dadurch gekennzeichnet, dass** die Führungsschiene (2, 2', 2", 2"', 2"", 2""') klemmend oder rastend an der Stange (9) festgelegt ist.

3. Anordnung nach Anspruch 1 oder 2, **dadurch gekennzeichnet, dass** die Stange (9) als Vollprofil ausgebildet ist.

4. Anordnung nach einem der Ansprüche 1 bis 3, **dadurch gekennzeichnet, dass** die Führungsschiene (2, 2', 2", 2"', 2"", 2""') aus einem gebogenen Metallblech hergestellt ist.

5. Anordnung nach einem der Ansprüche 1 bis 4, **dadurch gekennzeichnet, dass** die Führungsschiene (2, 2', 2", 2"', 2"", 2""') eine Dicke von weniger als 1 mm aufweist.

6. Anordnung nach einem der Ansprüche 1 bis 5, **dadurch gekennzeichnet, dass** die Führungsschiene (2, 2', 2", 2"', 2"", 2'"') eine Dicke zwischen 0,3 mm bis 0,8 mm aufweist.

7. Anordnung nach einem der Ansprüche 1 bis 6, **dadurch gekennzeichnet, dass** die Führungsschiene (2, 2', 2", 2"', 2"", 2""') zwei voneinander beabstandete Stege (7, 8) aufweist, zwischen denen ein Schlitz ausgebildet ist, durch den ein Abschnitt der Stange (9) durchführbar ist.

8. Anordnung nach einem der Ansprüche 1 bis 7, **dadurch gekennzeichnet, dass** die Stange (9) einen abgebogenen Endabschnitt (11) aufweist, an dem die Führungsschiene (2) abgestützt ist.

9. Anordnung nach einem der Ansprüche 1 bis 8, **dadurch gekennzeichnet, dass** die Stange (9) an gegenüberliegenden Seiten einen abgebogenen Endabschnitt (11) aufweist, an dem die Führungsschiene (2, 2', 2", 2"', 2"", 2""') in Längsrichtung abgestützt ist.

10. Anordnung nach einem der Ansprüche 1 bis 9, **dadurch gekennzeichnet, dass** die Führungsschiene (2) über ein zusätzliches Halteelement (30) an der Stange (9) festgelegt ist.

11. Anordnung nach einem der Ansprüche 1 bis 10, **dadurch gekennzeichnet, dass** die Führungsschiene (2, 2', 2", 2"', 2"", 2'"') mindestens eine Laufbahn (6) für Wälzkörper (4) ausbildet.

12. Anordnung nach Anspruch 11, **dadurch gekennzeichnet, dass** die Führungsschiene (2) im Bereich der Laufbahnen (6) an der Stange (9) abgestützt ist.

## Claims

1. Arrangement of a pull-out guide and a side grid (14), in particular for a baking oven, wherein the side grid (14) comprises a bar (9) and the pull-out guide (1, 1', 1"", 1'"") has a guide rail (2, 2', 2", 2"', 2"", 2'"') fixed in position and at least one running rail (3, 3"", 3""') mounted movably on the guide rail (2, 2', 2", 2"', 2"", 2 "') and the guide rail (2, 2', 2", 2"', 2"", 2""') is designed as a hollow profile, **characterized in that** a bar (9) is inserted into the guide rail (2, 2', 2", 2"', 2"", 2'"") at least in sections, the guide rail (2, 2', 2", 2"', 2"", 2""') being supported on said bar (9) and integrally with the guide rail (2, 2', 2", 2"', 2"", 2""') at least one protruding web (15, 20, 21, 15"', 15"") is formed that partially encompasses the bar (9).

2. Arrangement according to Claim 1, **characterized in that** the guide rail (2, 2', 2", 2"', 2"", 2""') is attached to the bar (9) in a clamped or locked in place fashion.

3. Arrangement according to Claim 1 or 2, **characterized in that** the bar (9) is designed as a solid profile.

4. Arrangement according to any one of Claims 1 to 3, **characterized in that** the guide rail (2, 2', 2", 2"', 2"", 2""') is manufactured from a piece of bent sheet metal.

5. Arrangement according to any one of Claims 1 to 4, **characterized in that** the guide rail (2, 2', 2", 2"', 2"", 2""') has a thickness of less than 1 mm.

6. Arrangement according to any one of Claims 1 to 5, **characterized in that** the guide rail (2, 2', 2", 2"', 2"", 2""') has a thickness of between 0,3 mm to 0,8 mm.

7. Arrangement according to any one of Claims 1 to 6, **characterized in that** the guide rail (2, 2', 2", 2"', 2"", 2""') features two webs (7, 8) spaced apart from each other, between which a slot is formed through which a section of the bar (9) can be led through.

8. Arrangement according to any one of Claims 1 to 7, **characterized in that** the bar (9) features a bent over end section (11) at which the guide rail (2) is supported.

9. Arrangement according to any one of Claims 1 to 8, **characterized in that** the bar (9) features on opposite sides a bent over end section (11) on which the guide rail (2, 2', 2", 2"', 2"", 2""') is supported in the longitudinal direction.

10. Arrangement according to any one of Claims 1 to 9, **characterized in that** the guide rail (2) is attached to the bar (9) by means of an additional retaining element (30).

11. Arrangement according to any one of Claims 1 to 10, **characterized in that** the guide rail (2, 2', 2", 2"', 2"", 2""') forms at least one running track (6) for rolling elements (4).

12. Arrangement according to Claim 11, **characterized in that** the guide rail (2) is supported on the bar (9) in the region of the running tracks (6).

## Revendications

1. Ensemble constitué par un guidage de déploiement télescopique et une grille latérale (14) en particulier destiné à un four, dans lequel la grille latérale (14) comporte une tige (9) et le guidage de déploiement télescopique (1, 1', 1 "", 1'"") comporte un rail de guidage fixe (2, 2', 2", 2"', 2"", 2""') et au moins un rail de roulement (3, 3"", 3""') monté mobile sur le rail de guidage fixe (2, 2', 2", 2"', 2"", 2""') et le rail de guidage (2, 2', 2", 2'", 2"", 2'"") est réalisé sous la forme d'un profilé creux, **caractérisé en ce que**
sur le rail de guidage (2, 2', 2", 2"', 2"", 2""') est insérée au moins par segments une tige (9) sur laquelle s'appuie le rail de guidage (2, 2', 2", 2"', 2"", 2'"") et, intégralement avec le rail de guidage (2, 2', 2", 2'", 2"") est réalisée au moins une barrette en saillie (15, 20, 21, 15'", 15"") qui entoure partiellement la tige (9).

2. Ensemble conforme à la revendication 1,
**caractérisé en ce que**
le rail de guidage (2, 2', 2", 2'", 2"", 2'"") est fixé par serrage ou encliquetage sur la tige (9).

3. Ensemble conforme à la revendication 1 ou 2,
**caractérisé en ce que**
la tige (9) est réalisée sous la forme d'un profilé plein.

4. Ensemble conforme à l'une des revendications 1 à 3,
**caractérisé en ce que**
le rail de guidage (2, 2', 2", 2'", 2"", 2'"") est réalisé à partir d'une tôle métallique repliée.

5. Ensemble conforme à l'une des revendications 1 à 4,
**caractérisé en ce que**
le rail de guidage (2, 2', 2", 2'", 2"", 2'"") a une épaisseur inférieure à 1 mm.

6. Ensemble conforme à l'une des revendications 1 à 5,
**caractérisé en ce que**
le rail de guidage (2, 2', 2", 2"', 2"", 2""') a une épaisseur comprise entre 0,3 mm et 0,8 mm.

7. Ensemble conforme à l'une des revendications 1 à 6,
**caractérisé en ce que**
le rail de guidage (2, 2', 2", 2'", 2"", 2'"") comprend deux barrettes (7, 8) situées à distance l'une de l'autre entre lesquelles est formée une fente au travers de laquelle peut être introduit un segment de la tige (9).

8. Ensemble conforme à l'une des revendications 1 à 7,
**caractérisé en ce que**
la tige (9) a un segment d'extrémité replié (11) sur lequel s'appuie le rail de guidage (2).

9. Ensemble conforme à l'une des revendications 1 à 8,
**caractérisé en ce que**
la tige (9) comporte sur des côtés opposés un segment d'extrémité replié (11) sur lequel s'appuie le rail de guidage (2, 2', 2", 2'", 2"", 2'"") en direction longitudinale.

10. Ensemble conforme à l'une des revendications 1 à 9,
**caractérisé en ce que**
le rail de guidage (2) est fixé à la tige (9) par l'intermédiaire d'un élément de retenue (30) supplémentaire.

11. Dispositif conforme à l'une des revendications 1 à 10,
**caractérisé en ce que**
le rail de guidage (2, 2', 2", 2'", 2"", 2'"") forme au moins une piste de roulement (6) pour des corps de roulement (4).

12. Ensemble conforme à la revendication 11,
**caractérisé en ce que** le rail de guidage (2) s'appuie sur la tige (9) dans la zone des pistes de roulement (6).
